Europäisches Patentamt

European Patent Office

Office européen des brevets

(11) Veröffentlichungsnummer: **0 433 599 A1**

(12) **EUROPÄISCHE PATENTANMELDUNG**

(21) Anmeldenummer: **90120012.1**

(22) Anmeldetag: **18.10.90**

(51) Int. Cl.5: **H02M 7/217**

(30) Priorität: **22.12.89 DE 3942645**

(43) Veröffentlichungstag der Anmeldung:
**26.06.91 Patentblatt 91/26**

(84) Benannte Vertragsstaaten:
**DE DK ES FR NL SE**

(71) Anmelder: **RICHARD HIRSCHMANN GMBH & CO.**
**Richard-Hirschmann-Strasse 19 Postfach 110**
**W-7300 Esslingen a.N.(DE)**

(72) Erfinder: **Ernst, Thomas**
**Eberhaldenstrasse 11/1**
**W-7300 Esslingen a. N.(DE)**

(74) Vertreter: **Geyer, Ulrich F., Dr. Dipl.-Phys. et al**
**WAGNER & GEYER Patentanwälte**
**Gewuerzmuehlstrasse 5 Postfach 246**
**W-8000 München 22(DE)**

(54) Wechselspannungs-Gleichspannungswandler.

(57) Der Wechselspannungs-Gleichspannungs-Wandler weist jeweils einen Eingangsschalter (21, 22) für die positive und die negative Halbwelle der Eingangs-Wechselspannung auf. Mit dem jeweiligen Eingangsschalter sind jeweils Kondensatoren (23 bzw. 25) für die positive und die negative Halbwelle verbunden. Dem jeweiligen Kondensator (23, 25) ist ein Ausgangsschalter (24 bzw. 26) zugeordnet, die die Kondensatoren (23 bzw. 25) abwechselnd mit dem Ausgang des Wechselspannungs-Gleichspannungs-Wandlers verbinden. Der erfindungsgemäße Wechselspannungs-Gleichspannungs-Wandler ist sehr einfach und kostengünstig zu fertigen und weist auf Grund der Tatsache, daß keine Transformatoren verwendet werden, ein sehr geringes Gewicht auf. Der Wandler ist insbesondere für Verbraucher besonders geeignet, die mit Wechselspannung ferngespeist werden.

Fig.2

## WECHSELSPANNUNGS-GLEICHSPANNUNGS-WANDLER

Die Erfindung betrifft Wechselspannungs-Gleichspannungs-Wandler.

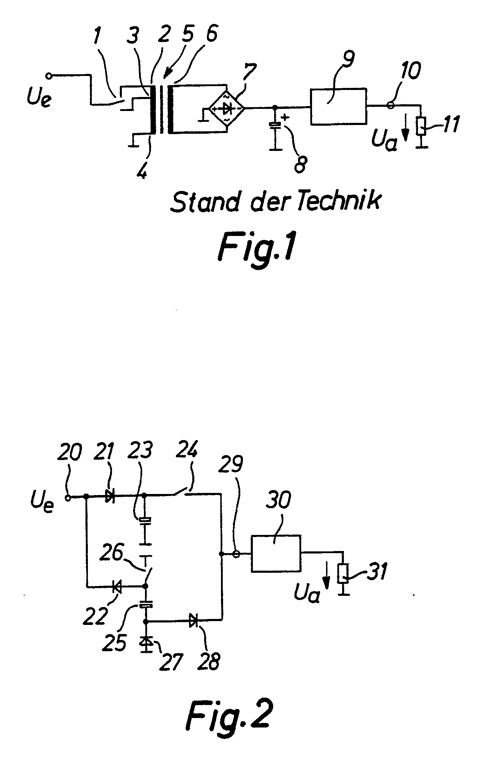

Wechselspannungs-Gleichspannungs-Wandler - nachfolgend mit AC-DC-Wandler bezeichnet - sind in verschiedenen Ausführungsformen bekannt. Eine der bekannten Schaltungsanordnungen dieser Art ist in Fig. 1 dargestellt. Ein Eingang Ue für die Wechselspannung ist über einen Schalter 1 wahlweise mit Anzapfungen 2 bzw. 3 einer Primärwicklung 4 eines Übertragers 5 verbunden. Der den Anzapfungen 2 bzw. 3 abgewandte Anschluß der Primärwicklung 4 des Übertragers 5 steht mit Masse in Verbindung. Die Anschlüsse einer Sekundärwicklung 6 stehen mit einem Gleichrichter 7 in Verbindung, dessen Ausgang über einen Glättungskondensator 8 mit Masse und über einen Längsregler 9 mit dem Ausgang 10 des Wandlers verbunden ist. Die Ausgangsspannung Ua fällt über einen Lastwiderstand 11 ab.

Obgleich diese bekannte Schaltungsanordnung relativ einfach und insbesondere bei kleinen Ausgangsleistungen kostengünstig herstellbar ist und keine Hochfrequenz-Entstörung durchgeführt werden muß, besteht der wesentliche Nachteil einer derartigen Schaltung darin, daß im Längsregler eine relativ hohe Verlustleistung auftritt. Abgesehen von den Nachteilen eines eng begrenzten Eingangsspannungsbereichs und eines großen Gewichts ist auf Grund der hohen Verlustleistung im Längsregler ein erheblicher Aufwand für die Kühlung erforderlich. Als weiterer Nachteil dieser Schaltungsanordnung besteht die Notwendigkeit, die Primärwicklung 4 mit wenigstens zwei Anzapfungen 2 bzw. 3 zu versehen, um dadurch die thermischen Verluste im Längsregler begrenzen zu können. Je nach den auftretenden Eingangsspannungen muß auf die jeweiligen Anzapfungen umgeschaltet werden, wobei ein zusätzlicher manueller Eingriff erforderlich ist.

Weitere herkömmliche Auführungsformen von AC-AD-Wandlern sind primär- und sekundärgetaktete Schaltnetzteile, die ebenso wie die in Fig. 1 dargestellte Ausführungsform einen Übertrager erfordern.

Obgleich primärgetakte Schaltnetzteile den Vorteil aufweisen, daß sie einen weiten Eingangsspannungsbereich und einen hohen Wirkungsgrad besitzen sowie relativ kleine Übertrager mit kleinem Bauvolumen und geringem Gewicht erfordern, sind derartigen AC-DC-Wandlern die Nachteile eigen, daß für die Schaltungsanordnung schnelle Transistoren und Dioden erforderlich sind, die den Wandler stark verteuern. Darüber hinaus ist eine Hochfrequenz-Entstörung notwendig.

Sekundärgetaktete Schaltnetzteile weisen zwar einen hohen Wirkungsgrad und einen weiten Eingangsspannungsbereich auf; sie benötigen jedoch einen Übertrager für die Netzfrequenz, der zu einem großen Bauvolumen und einem hohen Gewicht führt. Darüber hinaus ist auch für ein sekundärgetaktetes Schaltnetzteil eine Hochfrequenz-Entstörung erforderlich.

Der Erfindung liegt daher die Aufgabe zugrunde, einen AC-DC-Wandler zu schaffen, der sehr einfach und damit kostengünstig herstellbar ist, und ein geringes Gewicht aufweist.

Diese Aufgabe wird erfindungsgemäß gelöst durch jeweils einen Eingangsschalter für die positive und die negative Halbwelle der Eingangswechselspannung, jeweils einen mit dem jeweiligen Eingangsschalter verbundenen Kondensator für die positive und die negative Halbwelle, und jeweils einen dem jeweiligen Kondensator zugeordneten Ausgangsschalter, die die Kondensatoren abwechselnd mit dem Ausgang des Wechselspannungs-Gleichspannungs-Wandlers verbinden.

Mit den erfindungsgemäßen Merkmalen ergibt sich eine sehr einfache Schaltungsanordnung für einen AC-DC-Wandler, der sehr kostengünstig gefertigt werden kann. Von besonderem Vorteil ist dabei, daß Übertrager nicht erforderlich sind, so daß der erfindungsgemäße AC-DC-Wandler auf Grund des Wegfalls der relativ schweren Transformatoren ein wesentlich geringeres Gewicht als die herkömmlichen AC-DC-Wandler aufweist.

Gemäß einer besonders vorteilhaften Ausführungsform der Erfindung befindet sich der Eingangsschalter des einen Kondensators im leitenden Zustand, wenn der Ausgangsschalter des anderen Kondensators nicht leitend ist, und umgekehrt. Dabei sind die Eingangsschalter vorzugsweise Einweggleichrichter und insbesondere Dioden, die besonders einfach und kostengünstig sind.

Die Ausgangsschalter sind vorzugsweise Transistoren. Gemäß einer besonders vorteilhaften Ausgestaltung der Erfindung sind die Ausgangsschalter durch Darlington-Schaltungen gebildet.

Dem Ausgang des erfindungsgemäßen AC-DC-Wandlers ist vorzugsweise ein Spannungsregler nachgeschaltet. Der Spannungsregler weist vorzugsweise eine Überspannungs-Schutzschaltung auf. Besonders vorteilhaft ist es dabei, wenn der Spannungsregler ein Schaltregler ist. Dadurch ist keine manuelle Umschaltung zur Begrenzung der Verlustleistung im Spannungsregler erforderlich.

Um die Ausgangsspannung weiter zu glätten und/oder zu sieben, ist dem Ausgang des erfindungsgemäßen AC-DC-Wandlers eine Siebungs- und/oder Glättungsstufe nachgeschaltet.

Der erfindungsgemäße AC-DC-Wandler ist besonders für die Umsetzung in mit Wechselstrom ferngespeisten Verbrauchern geeignet.

Ferngespeiste Verbraucher sind im wesentlichen Hochfrequenzgeräte, wie Verstärker usw., denen die Betriebsspannung über das signalführende Koaxialkabel zugeführt wird. Obgleich die Fernspeisung auch grundsätzlich mit Gleichspannung vorgenommen werden kann, wird Wechselspannungs-Fernspeisung bevorzugt. Der Grund hierfür liegt darin, daß, bedingt durch die wechselnde Polarität, der Laststrom in beiden Richtungen über die Hochfrequenzanschlüsse fließt. Dadurch wird eine elektro-chemische Kontaktkorrosion weitgehend vermieden. Um eine Wechselspannungs-Fernspeisung zu ermöglichen, bzw. die durch Fernspeisung übertragene Wechselspannung in dem ferngespeisten Verbraucher in Gleichspannung umsetzen zu können, waren die beschriebenen Schaltungsprinzipien gemäß dem Stand der Technik notwendig, bei denen ein Transformator mit den damit verbundenen Nachteilen benötigt wurde. Mit dem erfindungsgemäßen AC-DC-Wandler ist nunmehr die Möglichkeit geschaffen, ohne einen Transformator auszukommen, und bei einer Wechselspannungs-Fernspeisung zu gewährleisten, daß sowohl während der positiven als auch während der negativen Halbwelle der Eingangsspannung Strom fließt, so daß eine elektro-chemische Kontaktkorrosion vermieden werden kann.

Die Erfindung wird nachstehend anhand der Zeichnungen beispielsweise näher erläutert. Es zeigen:

Fig. 1    einen AC-DC-Wandler gemäß dem Stande der Technik,

Fig. 2    das Prinzip des erfindungsgemäßen AC-DC-Wandlers in schematischer Darstellung,

Fig. 3    ein Ausführungsbeispiel des AC-DC-Wandlers in detaillierterer Darstellung und in Zusammenhang mit einem Spannungsregler und einer Überspannungs-Schutzschaltung.

Anhand der in Fig. 2 dargestellten schematischen Schaltungsanordnung wird das Grundprinzip der Erfindung nachfolgend erläutert.

Ein mit der gleichzurichtenden Wechselspannung Ue beaufschlagter Eingang 20 ist mit der Anode einer ersten Diode 21 und mit der Kathode einer zweiten Diode 22 verbunden. Die Kathode der ersten Diode 21 ist mit einem ersten Kondensator 23 und einem ersten Schalter 24 verbunden. Der andere (Minus-) Anschluß des ersten Kondensators 23 liegt an Masse. Die Kathode der zweiten Diode 22 ist mit dem Eingang 20 und die Anode ist mit einem zweiten Kondensator 25 und einem zweiten Schalter 26 verbunden, dessen anderer Anschluß geerdet ist. Der andere (Plus-) Anschluß des zweiten Kondensators 25 steht mit der Kathode einer dritten Diode 27 und der Anode einer vierten Diode 28 in Verbindung. Die Anode der dritten Diode 27 ist geerdet. Der dem ersten Kondensator 23 abgewandte Anschluß des ersten Schalters 24 sowie die Kathode der vierten Diode 28 sind gemeinsam mit einem Ausgang 29 verbunden, dem ein Spannungsregler 30 nachgeschaltet sein kann, und der einen zwischen dem Spannungsregler 30 und Masse schematisch dargestellten Lastwiderstand 31 beaufschlagt, an dem die Ausgangsspannung Ua abfällt. Der erste und zweite Kondensator 23 bzw. 25 kann jeweils ein Elektrolytkondensator sein.

Die erfindungsgemäße Schaltungsanordnung arbeitet folgendermaßen:

Während der positiven Halbwelle der Eingangsspannung Ue wird der erste Kondensator 23 über die als Einweggleichrichter dienende erste Diode 21 aufgeladen. Während dieser Zeit befindet sich der erste Schalter 24 im nicht-leitenden Zustand.

Während der negativen Halbwelle, während der die erste Diode 21 sperrt, wird der erste Schalter 24 in den leitenden Zustand versetzt, so daß sich der erste Kondensator 23 über den Ausgang 29, den Spannungsregler 30 und den Lastwiderstand 31 entladen kann.

Während dieses Vorgangs, also während des Auftretens der negativen Halbwelle der am Eingang 20 anliegenden Wechselspannung Ue wird der zweite Kondensator 25 über die als Gleichrichter wirkende zweite Diode 22 und die dritte Diode 27 aufgeladen, während der zweite Schalter 26 nicht leitend ist.

Während der positiven Halbwelle, während der - wie beschrieben - der erste Kondensator 23 aufgeladen wird, und der erste Schalter 24 nicht leitend ist, befindet sich der zweite Schalter 26 im leitenden Zustand, so daß sich der zweite Kondensator 25 über die vierte Diode 28, den Spannungsregler 30 und den Lastwiderstand 31 entlädt. Die vierte Diode 28 verhindert, daß während der Entladung des ersten Kondensators 23 über den dann leitenden ersten Schalter 24 ein Rückfluß auf den zweiten Kondensator 25 erfolgt.

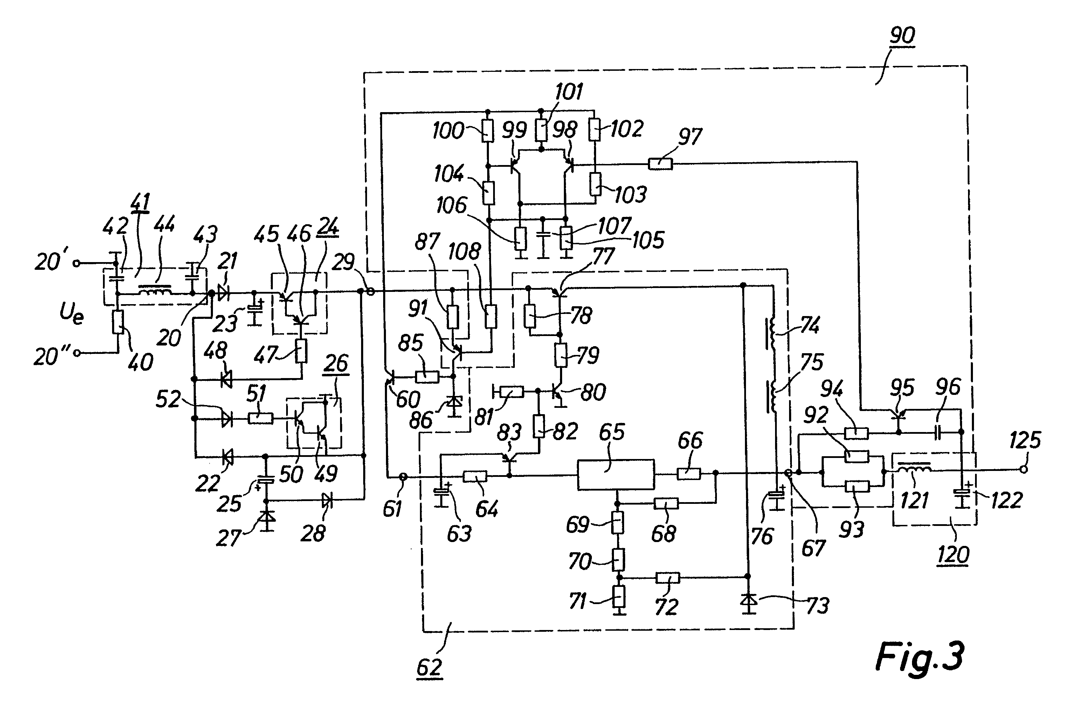

In Fig. 3 ist ein Ausführungsbeispiel für eine Schaltungsanordnung schematisch dargestellt, bei der das anhand von Fig. 2 erläuterte Schaltungsprinzip Anwendung findet. Schaltungsteile, die denen der Fig. 2 entsprechen, sind mit denselben Bezugzeichen versehen und werden nicht nochmals erläutert.

Die an den Eingängen 20' und 20" anliegende Eingangs-Wechselspannung Ue gelangt über eine Sicherung 40 und eine Hochfrequenz-Entstörstufe 41 an den dem Eingang 20 von Fig. 2 entsprechenden Eingang 20. Die Hochfrequenz-Entstörstufe 41 ist in der üblichen Weise ausgebildet und besteht aus einer in Reihe geschalteten Drossel 44 und zwei Kondensatoren 42 und 43, die einerseits mit dem jeweiligen Anschluß der Drossel 44 und andererseits mit Masse bzw. der Eingangsklemme 20" ver bunden sind.

Die in Fig. 3 dargestellten Schaltungselemente 21, 22, 23, 25, 27, 28 entsprechen denen in Fig. 2 mit denselben Bezugszeichen versehenen Bauelementen, so daß hier auf deren Beschreibung verzichtet wird. Der in Fig. 2 dargestellte erste Schalter 24 wird mittels einer Darlington-Schaltung realisiert, die aus den Transistoren 45 und 46 besteht. Während der Emitter des Transistors 45 als Eingang des ersten Schalters 24 dient und mit dem ersten Kondensator 23 verbunden ist, ist der Kollektor des Transistors 45 mit dem Ausgang 29 und gleichzeitig mit dem Kollektor des Transistors 46 verbunden, dessen Emitter mit der Basiselektrode des Transistors 45 verbunden ist. Die Basiselektrode des Transistors 46 ist über einen Widerstand 47 mit der Anode einer Diode 48 verbunden, deren Kathode am Eingang 20 der erfindungsgemäßen Schaltung liegt.

In entsprechender Weise wird der in Fig. 2 schematisch dargestellte zweite Schalter 26 durch eine aus den Transistoren 49 und 50 bestehenden, herkömmlichen Darlington-Schaltung gebildet, wobei die Transistoren 49 und 50 in entsprechender Weise wie die Transistoren 45 und 46 des in Fig. 2 schematisch dargestellten ersten Schalters 24 geschaltet sind. Die Basiselektrode des Transistors 50 des zweiten Schalters 26 ist dabei über einen Widerstand 51 mit der Kathode einer Diode 52 verbunden, deren Anode am Eingang 20 liegt.

Der Ausgang 29 der erfindungsgemäßen Schaltungsanordnung ist über die Kollektor-Emitter-Strecke eines Transistors 60 mit dem Eingang 61 eines an sich bekannten Schaltreglers 62 verbunden, dessen Bauelemente in Fig. 3 mit einem entsprechenden gestrichelt daegestellten Rahmen umgeben sind. Ein derartiger Schaltregler 62 wird von der Firma National Semiconductor Corporation angeboten und ist im Linear Data Book, 1982, dieser Firma im einzelnen dargestellt.

Der Eingang 61 des Schaltreglers 62 ist mit einem Anschluß eines Kondensators 63 verbunden, dessen anderer Anschluß an Masse liegt. Der dem geerdeten Anschluß des Kondensators 63 abgewandte Anschluß ist über einen Widerstand 64 mit dem Eingang einer integrierten Schaltung 65 verbunden, die im dargestellten Ausführungsbeispiel eine integrierte Schaltung mit der Typenbezeichnung LM 317 T der Firma National Semiconductor Corp. ist. Der Ausgang der integrierten Schaltung 65 liegt über einen Widerstand 66 am Ausgang 67 des Schaltreglers 62. Das am Ausgang 67 anliegende Ausgangssignal des Schaltreglers 62 wird über einen Widerstand 68 einem Adjust-Eingang der integrierten Schaltung 65 bereitgestellt, der über einen aus den Widerständen 69, 70 und 71 bestehenden Spannungsteiler mit Masse verbunden ist. Der Verbindungspunkt zwischen den Widerständen 70 und 71 steht über einen Widerstand 72 mit der Kathode einer Diode 73 in Verbindung, die mit ihrem anderen Anschluß geerdet ist.

Der Verbindungspunkt zwischen dem Widerstand 72 und der Kathode der Diode 73 liegt an dem dem Ausgang des Schaltreglers 62 abgewandten Ende zweier in Reihe geschalteter Drosseln 74 und 75 an, deren anderer Anschluß einerseits mit dem Ausgang 67 des Schaltreglers 62 und andererseits mit einem Kondensator 76 verbunden ist, dessen anderer Anschluß geerdet ist.

Der dem Ausgang 67 des Schaltreglers 62 abgewandte Anschluß der Drossel 74 ist mit dem Kollektor eines Transistors 77 verbunden, dessen Emitter mit dem Ausgang 29 der erfindungsgemäßen Schaltungsanordnung in Verbindung steht.

Die Basiselektrode des Transistors 77 ist einerseits über einen Widerstand 78 mit dem Emitter des Transistors 77 und anderseits über einen Widerstand 79 mit dem Kollektor eines Transistors 80 verbunden, dessen Emitter geerdet ist und des sen Basiselektrode einerseits über einen Widerstand 81 geerdet ist und andererseits über einen Widerstand 82 am Kollektor eines Transistors 83 liegt. Die Basiselektrode des Transistors 83 ist mit dem Eingang der integrierten Schaltung 65 und dessen Emitter ist mit dem Eingang 61 des Schaltreglers verbunden.

Die Basiselektrode des Transistors 60 ist über einen Widerstand 85 mit der Kathode einer Zenerdiode 86 verbunden, deren Anode geerdet ist. Der Verbindungspunkt zwischen dem Widerstand 85 und der Zenerdiode 86 liegt über die Kollektor-Emitter-Strecke eines Transistors 91, der Teil einer im weiteren noch zu beschreibenden Überspannungs-Schutzschaltung 90 ist, sowie über einen Widerstand 87 am Ausgang 29 der erfindungsgemäßen Schaltungsanordnung an.

Die Überspannungs-Schutzschaltung 90 umfaßt die innerhalb einer entsprechenden gestrichelten Umrandung vorgesehenen Bauelemente.

Eine ebenfalls strichliniert umrandete Schaltungsanordnung 120 stellt eine Siebungs- und/oder Glättungsstufe 120 für die Ausgangsspannung des AC-DC-Wandlers dar. Diese Siebungs- und Glättungsstufe 120 umfaßt eine Drossel 121, die mit ihrem dem Spannungsregler 62 abgewandten Anschluß einerseits mit einem Kondensator 122 verbunden ist, dessen anderer Anschluß an Masse liegt. Der dem Masseanschluß abgewandte Anschluß des Kondensators 122 steht mit dem Ausgang 125 der Gesamtschaltung in Verbindung.

Zwischen dem Ausgang 67 des Spannungsreglers 62 und der Siebungs-und/oder Glättungsstufe 120 befindet sich eine aus den Widerständen 92 und 93 bestehende Widerstands-Parallelschaltung, die Teil der Überspannungs-Schutzschaltung 90 ist. Die im weiteren beschriebenen Bauelemente sind ebenfalls Teil der Überspannungs-Schutzschaltung 90 wie sich dies aus der gestrichelten Umrandung dieses Schaltungsteils 90 ergibt.

Der Ausgang 67 des Schaltreglers 62 ist über einen Widerstand 94 mit der Basiselektrode eines Transistors 95 verbunden, die über einen Kondensator 96 sowohl mit dem Ausgang 125 der Gesamtschaltung als auch mit dem Emitter des Transistors 95 in Verbindung steht. Der Kollektor des Transistors 95 ist über einen Widerstand 97 mit der Basiselektrode eines Transistors 98 verbunden, der zusammen mit einem weiteren Transistor 99 einen bistabilen Multivibrator bildet. Der Ausgang 29 des erfindungsgemäßen, eigentlichen AC-DC-Wandlers ist über einen Widerstand 100 mit der Basiselektrode des Transistors 99, über einen Widerstand 101 mit den miteinander in Verbindung stehenden Emittern der Transistoren 98 und 99 und über einen Widerstand 102 mit der Basiselektrode des Widerstands 98 verbunden. In einer für einen bistabilen Multivibrator üblichen Weise liegt die Basiselektrode des Transistors 98 über einen Widerstand 103 am Kollektor des Transistors 99 und die Basiselektrode des Transistors 99 über einen Widerstand 104 am Kollektor des Transistors 98 an. Die Kollektoren der Transistoren 98 und 99 sind über Widerstände 105 bzw. 106 mit Masse verbunden. Zwischen dem Verbindungspunkt zwischen den Widerständen 104 und 105 einerseits und Masse andererseits befindet sich ein Kondensator 107.

Der Verbindungspunkt zwischen den Widerständen 104 und 105 ist über einen Widerstand 108 mit der Basiselektrode des bereits erwähnten Transistors 91 verbunden.

Die Funktionsweise der Schaltungsanordnung wird nachfolgend erläutert.

Die Eingangs-Wechselspannung, die in einem Spannungsbereich von 27 bis 55 Volt liegt, erfährt in der Hochfrequenz Entstör stufe 41 eine Hochfrequenz-Entstörung und wird entsprechend den im Zusammenhang mit Fig. 2 beschriebenen Prinzipien der vorliegenden Erfindung gleichgerichtet, so daß am Ausgang 29 der erfindungsgemäßen Schaltungsanordnung im wesentlichen eine Gleichspannung anliegt. Die in Fig. 2 enthaltenen ersten und zweiten Schalter 24 bzw. 26, die in Fig. 3 jeweils durch die beschriebenen Darlington-Schaltungen realisiert sind, werden von den jeweiligen Halbwellen der Eingangs-Wechselspannung über die Dioden 48 bzw. 52 in der Weise geschaltet, wie dies im Zusammenhang mit Fig. 2 beschrieben wurde.

Am Ausgang 29 dieses das Grundprinzip der Erfindung bildenden Schaltungsteils liegt eine im wesentlichen gleichgerichtete Spannung an.

Der Schaltregler 62 ist - wie bereits erwähnt - bekannt, so daß dessen Funktion der Übersichtlichkeit halber hier nicht nochmals erläutert werden soll. Der Nachteil der herkömmlichen Schaltung besteht darin, daß der Eingangsspannungsbereich auf maximal 35 Volt begrenzt ist. Bei dem auftretenden Spannungsbereich der Eingangsspannung können jedoch am Schaltungspunkt 29 bzw. am Emitter des Transistors 77 Spannungswerte zwischen ca. 27 und 80 Volt auftreten. Durch die Verwendung des Transistors 60 wird gemäß einem besonders vorteilhaften zusätzlichen Merkmal der Erfindung die Eingangsspannung des Schaltreglers (62) der auf ca. 33 Volt begrenzt. Der Schalttransistor 77 wird über die Transistoren 80 und 83 angesteuert. Auf Grund dieses zusätzlichen, wesentlichen Schaltungsprinzips ist ein größerer Bereich der Eingangsspannung gegenüber der herkömmichen, vom Hersteller des Schaltreglers 62 angegebenen Applikation möglich.

Die Drosseln 74 und 75 dienen als Speicherdrosseln, wobei der Kondensator 76 im Zusammenhang mit der Siebungs- und/oder Glättungsstufe 120, die aus der Drossel 121 und dem Kondenstor 122 besteht, die Ausgangsspannung siebt und glättet.

Die dargestellte Ausführungsform ermöglicht bei maximaler Eingangsspannung einen Wirkungsgrad der Schaltung von ca. 60 %. Am Ausgang 125 der Schaltung wird im dargestellten Ausführungsbeispiel eine Spannung von 24 V bei der Stromstärke von 350 mA bereitgestellt.

Die Überspannungs-Schutzschaltung 90 ist eine zusätzliche Ausgestaltung und Erweiterung der zuvor beschriebenen Schaltung. Bei Verwendung dieser Überspannungs-Schutzschaltung 90 werden die Widerstände 92 und 93 sowie die Drossel 121 als Fühler des Ausgangsstroms verwendet. Wenn an der aus den Widerständen 92, 93 und der Drossel 121 bestehenden Schaltungskombination ein Spannungsabfall auftritt, der gleich oder größer 0,7 Volt ist, wird der Transistor 95 in den leitenden Zustand versetzt. Dadurch wird der die Transistoren 98 und 99 umfassende bistabile Multivibrator "gekippt" bzw. umgeschaltet und damit auch der Transistor 60 in den nicht-leitenden Zustand versetzt. Das bedeutet, daß am Eingang 61 das Schaltreglers 62 keine Spannung mehr auftritt, so daß der Schalttransistor 77 in den nicht leitenden Zustand übergeht und die gesamte Stabilisierungsschaltung nicht mehr arbeiten kann.

Die Funktion des Kondensators 101 besteht darin, daß der bistabile Multivibrator mit den Transistoren 98 und 99 bei Anlegen einer Eingangsspannung in den Schaltzustand gebracht wird, bei dem die Transistoren 77 und 91 und damit auch der Transistor 60 in den leitenden Zustand gelangen bzw gelangt.

Damit kurze Überspannungs-Impulse die Überspannungs-Schutzschaltung 90 nicht zum Auslösen bringen, ist der Kondensator 96 vorgesehen, der insbesondere durch Aufladung des Kondensators 122 das Ansprechen der Überspannungs-Schutzschaltung 90 verhindert.

Die Erfindung wurde anhand eines bevorzugten Ausführungsbeispiels für einen AC-DC-Wandler beschrieben, bei dem eine Hochfrequenz-Entstörstufe 41, ein Schaltregler 62, eine Überspannungs-Schutzschaltung 90 und eine Siebungs- und Glättungsstufe 120 verwendet wurden. Dem Fachmann sind jedoch zahlreiche Abwandlungen und Ausgestaltungen möglich, ohne daß dadurch der Erfindungsgedanke verlassen wird. Beispielsweise ist es möglich, die genannten zusätzlichen Schaltungsstufen ganz oder teilweise wegzulassen oder in anderer Weise auszubilden, um die erfindungsgemäße Schaltungsanordnung an entsprechende Applikationen anzupassen.

**Ansprüche**

1. Wechselspannungs-Gleichspannungs-Wandler, **gekennzeichnet** durch
   - jeweils einen Eingangsschalter (21 bzw. 22) für die positive und die negative Halbwelle einer Eingangs-Wechselspannung (Ue),
   - jeweils einen mit dem jeweiligen Eingangsschalter (21 bzw. 22) verbundenen Kondensator (23 bzw. 25) für die positive und die negative Halbwelle, und
   - jeweils einen dem jeweiligen Kondensator (23 bzw. 25) zugeordneten Ausgangsschalter (24, 26), die die Kondensatoren (23, 25) abwechselnd mit dem Ausgang (29) des Wechselspannungs-Gleichspannungs-Wandlers verbinden.

2. Wechselspannungs-Gleichspannungs-Wandler nach Anspruch 1, dadurch gekennzeichnet, daß sich der Ausgangsschalter (24 bzw. 26) des einen Kondensators (23 bzw. 25) im leitenden Zustand befindet, wenn der Ausgangsschalter (26 bzw. 24) des anderen Kondensators (25 bzw. 23) nicht leitend ist, und umgekehrt.

3. Wechselspannungs-Gleichspannungs-Wandler nach Anspruch 1 oder 2, dadurch gekennzeichnet, daß die Eingangsschalter (21, 22) Einweggleichrichter sind.

4. Wechselspannungs-Gleichspannungs-Wandler nach einem der Ansprüche 1 bis 3, dadurch gekennzeichnet, daß die Eingangsschalter (21, 22) Dioden sind.

5. Wechselspannungs-Gleichspannungs-Wandler nach einem der Ansprüche 1 bis 4, dadurch gekennzeichnet, daß die Ausgangsschalter (24, 26) Transistoren sind.

6. Wechselspannungs-Gleichspannungs-Wandler nach einem der Ansprüche 1 bis 6, dadurch gekennzeichnet, daß die Ausgangsschalter (24, 26) jeweils Darlington-Schaltungen (45, 46 bzw. 49. 50) sind.

7. Wechselspannungs-Gleichspannungs-Wandler nach einem der Ansprüche 1 bis 6, dadurch gekennzeichnet, daß dem Ausgang ein Spannungsregler (30; 62) nachgeschaltet ist.

8. Wechselspannungs-Gleichspannungs-Wandler nach einem der Ansprüche 1 bis 7, dadurch gekennzeichnet, daß der Spannungsregler (30) eine Überspannungs-Schutzschaltung (90) aufweist.

9. Wechselspannungs-Gleichspannungs-Wandler nach einem der Ansprüche 1 bis 8, dadurch gekennzeichnet, daß der Spannungsregler (30) ein Schaltregler (62) ist.

10. Wechselspannungs-Gleichspannungs-Wandler nach einem der Ansprüche 1 bis 9, dadurch gekennzeichnet, daß dem Ausgang eine Siebungs- und/oder Glättungsstufe (120) nachgeschaltet ist.

11. Wechselspannungs-Gleichspannungs-Wandler nach einem der Ansprüche 1 bis 10, dadurch gekennzeichnet, daß der Wechselspannungs-Gleichspannungs-Wandler für die Umsetzung in mit Wechselstrom ferngespeisten Verbrauchern vorgesehen ist.

EP 0 433 599 A1

Stand der Technik

Fig.1

Fig.2

7

*Fig.3*

| | Europäisches Patentamt | EUROPÄISCHER RECHERCHENBERICHT | Nummer der Anmeldung EP 90 12 0012 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | IBM TECHNICAL DISCLOSURE BULLETIN. vol. 15, no. 11, April 1973, NEW YORK US Seiten 3459 - 3460; Gerbitz: "Full-Wave Rectifier and Regulator" * das ganze Dokument * | 1-4 | H 02 M 7/217 |
| | — — — | | |
| A | RESEARCH DISCLOSURE. no. 303, Juli 1989, HAVANT GB Seiten 502 - 503; "Vollwellen-Gleichrichterschaltungen mit durchgehender Masse" * das ganze Dokument * | 1-5 | |
| | — — — | | |
| A | US-A-3 478 258   (NAGAI) * Spalten 1 - 3; Figuren 1, 2 * | 1-5,7 | |
| | — — — — — | | |

|  | RECHERCHIERTE SACHGEBIETE (Int. Cl.5) |
|---|---|
| | H 02 M |

Der vorliegende Recherchenbericht wurde für alle Patentansprüche erstellt

| Recherchenort | Abschlußdatum der Recherche | Prüfer |
|---|---|---|
| Den Haag | 01 Februar 91 | VAN DEN DOEL J.C. |